# EUROPÄISCHE PATENTSCHRIFT

(11) **EP 2 456 692 B1**
(45) Veröffentlichungstag und Bekanntmachung des Hinweises auf die Patenterteilung: **23.03.2016**
(21) Anmeldenummer: 10737509.9
(22) Anmeldetag: 20.07.2010
(51) Int. Cl.: G01N 35/00, B65G 11/20

(54) **ZUTEILEINRICHTUNG ZUR VEREINZELUNG VON PARTIKELN IN EINEM PARTIKELSTROM**
DISTRIBUTING DEVICE FOR SEPARATING PARTICLES IN A PARTICLE STREAM
DISPOSITIF DISTRIBUTEUR POUR SÉPARER DES PARTICULES DANS UN FLUX DE PARTICULES

(30) Priorität: 24.07.2009 DE 102009034689
(43) Veröffentlichungstag der Anmeldung: 30.05.2012
(73) Patentinhaber: Retsch Technology GmbH, 42781 Haan (DE)
(72) Erfinder: BECKMANN, Gert, 42781 Haan-Gruiten (DE)
(74) Vertreter: Schleitzer, Dirk-Karsten
(86) Internationale Anmeldenummer: PCT/EP2010/004417
(87) Internationale Veröffentlichungsnummer: WO 2011/009585

(56) Entgegenhaltungen:
- EP-A2- 0 518 188
- US-A- 2 786 565
- US-A- 3 216 631
- US-A- 4 078 698

## Beschreibung

Die Erfindung betrifft eine Zuteileinrichtung zur Vereinzelung und Orientierung von Partikeln in einem über die Zuteileinrichtung zu einem Partikelmessgerät geführten Partikelstrom, wobei die Zuteileinrichtung eine Fördereinrichtung mit einem an deren Ende angeordneten Abwurf umfasst.

Eine Zuteileinrichtung mit den vorgenannten Merkmalen ist in der EP 0 518 188 A2 beschrieben. Soweit darin ein dynamisches Partikelmessgerät beschrieben ist, werden die in ihren Abmessungen zu bestimmenden Partikel über beispielsweise eine Vibrationsrinne als Zuteileinrichtung vereinzelt und zugeführt und gelangen von dem an deren Ende befindlichen Abwurf im freien Fall zwischen eine Lichtwelle und eine Bilderfassungseinrichtung, wobei auf der Basis der entsprechend erfassten und ausgewerteten Daten die Bestimmung der Größenverteilungen der über die Zuteileinrichtung vereinzelten Partikel erfolgt.

Die Partikel müssen an den Bilderfassungsgeräten im freien Fall in einem geeigneten Abstand vorbeigeführt werden. Weiterhin ist im Falle von länglichen Partikeln die größte Partikelabmessung (die "Länge" der Partikel) relevant, so dass eine Ausrichtung der Partikel vor dem Passieren der Bilderfassungseinrichtung angezeigt ist. Beiden Forderungen ist mit der aus der EP 0 518 188 A2 bekannten Vibrationsrinne als Zuteileinrichtung ohne einen besonders gestalteten Abwurf nicht nachzukommen.

Ferner ist in der US 3 216 631 A eine Vorrichtung zur Steuerung des Flusses von relativ kleinen und zerbrechlichen Gegenständen beschrieben, bei welcher die beispielsweise in Form von Ampullen, Flaschen. Metallteilen, Glas- oder Plastikbehältern, elektronischen Röhren, elektrischen Glühlampen oder ähnlichem vorliegenden Gegenstände während des Förderflusses durch die Vorrichtung in eine exakt vorgegebene Stellung gebracht werden sollen. Hierzu ist dem Abwurf der Fördereinrichtung ein feststehendes Leitelement in Form einer daran anschließenden Rutsche zugeordnet, über die die Gegenstände einzeln nacheinander abrutschen. Der Rutsche gegenüberliegend ist ein mit einstellbarem und dadurch die Breite eines trichterförmigen Spaltes festlegbaren Abstand ein Federelement angeordnet, welches ein unnötiges Springen oder Verklemmen der Gegenstände auf der Rutsche sowie ein zu schnelles Rutschen der Gegenstände über die Rutsche verhindert.

Der US 2 786 565 A ist eine Vorrichtung zur Vermeidung einer Überschüttung eines nachgeschalteten Förderers mit darauf zu übergebenden Holzbrettern zu entnehmen, bei welcher eine Zuteileinrichtung ebenfalls von einer festen Wand und einer dazu über ein Gewicht beweglich anstellbaren Wand gebildet ist, wobei die beiden Wände einen trichterförmigen, von den Holzbrettern zu passierenden Zuführspalt ausbilden. Das Gewicht drückt die bewegliche Wand ständig in Richtung der festen Wand, wobei die bewegliche Wand bei einer zu großen gleichzeitigen Zufuhr von Holzbrettern aus ihrer Position geschwenkt wird und den Weg für ein Herausfallen der Holzbretter aus der Fördervorrichtung freigibt.

In der US 4 078 698 A ist schließlich eine Fördervorrichtung für parallelepipede flache Körper wie insbesondere Tonbandkassetten beschrieben, bei der die zugeführten Kassetten in eine exakte Position vereinzelt werden sollen. Hierzu ist dem Abwurf der Fördervorrichtung ein einen Zuführspalt ausbildender Trichter nachgeschaltet, in welchem ein über Sensoren gesteuerter, von einem Elektromagneten zwischen zwei Positionen umsteuerbarer Hebel angeordnet ist, der die Tonbandkassetten entsprechend ihrer Zufuhrposition in den Trichter in die gewünschte Stellung verbringt.

Der Erfindung liegt die Aufgabe zugrunde, eine Zuteileinrichtung für die eine nachgeschaltete Bilderfassungseinrichtung im freien Fall passierenden Partikel eines Partikelstroms so auszugestalten, dass eine gerichtete Zufuhr der vereinzelten Partikel in die zwischen Bilderfassungsgerät und Lichtquelle befindliche Strecke gegeben ist.

Die Lösung dieser Aufgabe ergibt sich einschließlich vorteilhafter Ausgestaltungen und Weiterbildungen der Erfindung aus dem Inhalt der Patentansprüche, welche dieser Beschreibung nachgestellt sind.

Die Erfindung sieht hierzu eine Zuteileinrichtung mit den gattungsgemäßen Merkmalen vor, bei welcher dem Abwurf der Fördereinrichtung wenigstens zwei relativ zueinander bewegliche Leitelemente mit einem sich dazwischen ausbildenden Zuführspalt für die von dem Abwurf fallenden vereinzelten Partikel zugeordnet sind, die nach Art eines an ihrem Ende den Zuführspalt ausbildenden Trichters angeordnet sind, wobei wenigstens eines der Leitelemente unter der Wirkung eines Antriebes beweglich angeordnet ist.

Mit der Erfindung ist somit der Vorteil verbunden, dass durch die Anordnung der Leitelemente mit dem durch diese definierten Zuführspalt die Partikel beim Passieren des Zuführspaltes zwangsweise orientiert werden, so dass die größten Partikelabmessungen sicher ermittelt werden können. Aufgrund der mittels des erfindungsgemäß vorgesehenen Antriebes herbeigeführten Relativbewegung der Leitelemente zueinander wird ein Verstopfen des Zuführspaltes, beispielsweise durch sich quer stellende Partikel oder durch Brückenbildung von Partikeln, vermieden. Dabei ist die Bewegung beziehungsweise die Beweglichkeit der Leitelemente so aufeinander eingestellt, dass der sich durch die Bewegung der Leitelemente jeweils bildende Zuführspalt durch die Relativbewegung der Leitelemente zueinander letztlich weitestgehend konstant bleibt und nicht wesentlich beeinflusst ist.

Die erfindungsgemäße Zuteileinrichtung kann dabei eine Fördereinrichtung aufweisen, die entweder ein linear umlaufendes Förderband, eine Vibrationsrinne beziehungsweise eine sonstwie in Bewegung versetzte Fördereinrichtung oder aber auch eine einfache stationäre Rutsche oder andere Förderebene aufweist, über die die Partikel den an dem Abwurf angeordneten Leitelementen zugeführt werden.

Soweit vorgesehen ist, dass eines der beiden Leitelemente jeweils mit einstellbarer Frequenz und Amplitude bewegbar ist, kann diese Bewegung jeweils in unterschiedlichen Richtungen ausgerichtet sein. Diese Bewegungsrichtungen, vorzugsweise in Form einer Hin- und Herbewegung, können horizontal in der Förderrichtung der Fördereinrichtung oder horizontal quer dazu ausgewählt sein, ferner auch vertikal senkrecht zur Förderebene der Fördereinrichtung. Die Bewegung des entsprechenden Leitelementes kann dabei wahlweise ausschließlich in einer der vorgenannten Bewegungsrichtungen oder aber auch mit einer sich aus den vorgenannten Bewegungsrichtungen überlagernden Bewegungsrichtung geschehen.

Nach einem Ausführungsbeispiel der Erfindung kann vorgesehen sein, dass jeweils beide Leitelemente beweglich sind, wobei die Leitelemente gleichzeitig, jedoch in unterschiedlichen Bewegungsrichtungen beweglich sein können. Es kann auch vorgesehen sein, dass die Leitelemente gleichzeitig, aber in jeweils der gleichen Bewegungsrichtung beweglich sind, wobei bei der Bewegung der Leitelemente in der gleichen Bewegungsrichtung die Bewegung der Leitelemente gegenläufig zueinander eingerichtet sein kann.

Bei einer Bewegung der beiden Leitelemente kann vorgesehen sein, dass die Bewegung der Leitelemente mit jeweils gleicher oder aber auch unterschiedlicher Frequenz erfolgt, wie auch mit gleicher Amplitude oder mit unterschiedlichen Amplituden.

In einer ersten Anordnung der Leitelemente kann vorgesehen sein, dass die Leitelemente quer zur Abwurfrichtung der Fördereinrichtung ausgerichtet sind, wobei das in Förderrichtung der Fördereinrichtung von deren Abwurf beabstandete Leitelement als Prallelement wirkt. Bei einer derartigen Orientierung der Leitelemente zur Fördereinrichtung kann sich eines der Leitelemente beziehungsweise können sich beide Leitelemente jeweils in den Bewegungsrichtungen bewegen, wie vorstehend angegeben.

Bei einer derartigen Orientierung der Leitelemente kann die Wirkung der Zuteileinrichtung dadurch verbessert sein, dass an den Abwurf der Fördereinrichtung ein zusätzliches Absturzelement angeschlossen ist, welches sich in den von den Leitelementen gebildeten Zuführspalt erstreckt, wobei vorgesehen sein kann, dass das Absturzelement aus einer im wesentlichen ebenen Platte besteht, die in einer vertikalen Ausrichtung an den Abwurf der Fördereinrichtung angeschlossen ist.

Nach einem Ausführungsbeispiel der Erfindung kann vorgesehen sein, dass das Absturzelement unter der Wirkung eines Antriebes beweglich ist. Es versteht sich, dass insoweit das Absturzelement entsprechend die gleichen Bewegungsrichtungen aufweisen kann, wie zu den Leitelementen beschrieben, nämlich horizontal in der Förderrichtung der Fördereinrichtung, quer dazu wie auch vertikal senkrecht zur Förderebene der Fördereinrichtung. Bei einem dermaßen beweglich angeordneten Absturzelement kommt es nicht darauf an, ob das dem als Prallelement dienenden vorderen Leitelement gegenüberliegende und damit in Abwurfrichtung hinter beziehungsweise unter dem Abwurf liegende hintere Leitelement unbeweglich oder aber selbst doch beweglich angeordnet ist.

In einer alternativen Anordnung der Leitelemente kann vorgesehen sein, dass sich die einander gegenüberliegenden Leitelemente in der Förderrichtung der Fördereinrichtung demnach in deren Längsrichtung erstrecken. Hierbei werden die Partikel in Längsrichtung zwischen die Leitelemente aufgegeben, wobei in diesem Fall der Abwurf zwischen den trichterförmig angeordneten Leitelementen positioniert ist. Auch bei einer derartigen Positionierung der Leitelemente kann sich eines der Leitelemente beziehungsweise können sich beide Leitelemente jeweils in den angegebenen Bewegungsrichtungen bewegen.

Nach einem Ausführungsbeispiel der Erfindung ist vorgesehen, dass die Leitelemente und/oder das Absturzelement plattenartig ausgebildet sind.

Die Funktion der Leitelemente kann dadurch verbessert sein, dass nach einem Ausführungsbeispiel der Erfindung die Leitelemente und/oder das Absturzelement aus einem elastischen Material bestehen, soweit die Leitelemente dann dem Aufprall der Partikel nachgeben können. Auch kann durch die Elastizität der Leitelemente beziehungsweise des Absturzelements deren durch die eingeleitete Bewegung bewirkte Wirkung verstärkt werden.

Hinsichtlich der Ausbildung von Leitelementen und/oder Absturzelement kann vorgesehen sein, dass die jeweiligen Elemente aus einzelnen und gegeneinander beweglich angeordneten Segmenten bestehen, so dass die Leitelemente und/oder das Absturzelement partiell beziehungsweise in sich beweglich sind.

Hierbei kann gemäß unterschiedlichen Ausführungsbeispielen der Erfindung vorgesehen sein, dass die Segmente von Leitelementen und/oder Absturzelement gegeneinander beispielsweise parallel zueinander verschiebbar angeordnet sind oder aber auch verschwenkbar gegeneinander angeordnet sind. Auch kann vorgesehen sein, dass die Segmente einzeln an Drehgelenken aufgehängt sind und damit jeweils drehbeweglich angeordnet sind. Hinsichtlich der Antriebe zur Ausführung der Bewegung der Leitelemente beziehungsweise des Absturzelements kann vorgesehen sein, dass die Antriebe als rotatorische Antriebe mit oder ohne nachgeschaltetem Getriebe oder aber als Linearantriebe mit oder ohne nachgeschaltetem Getriebe ausgestaltet sind. Als Antriebe kommen dabei wahlweise elektrische, hydraulische oder pneumatische Antriebe in Frage.

In der Zeichnung sind Ausführungsbeispiele der Erfindung wiedergegeben, welche nachstehend beschrieben sind. Es zeigen:
- Fig. 1: eine Zuteileinrichtung mit zwei Leitelementen in einer schematischen Darstellung,
- Fig. 2: den Gegenstand der Figur 1 mit der zusätzlichen Anordnung eines Absturzelementes.

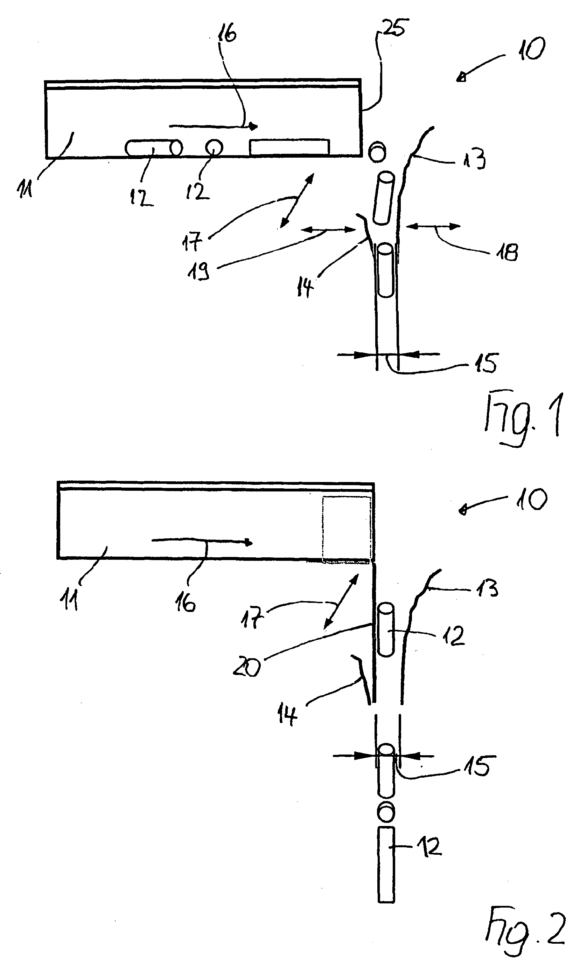

Die in Figur 1 schematisch dargestellte Zuteileinrichtung 10 besteht aus einer Fördereinrichtung 11, auf der Partikel 12 liegen, die mittels einer Bewegung der Fördereinrichtung 11 zu einem an deren Ende angeordneten Abwurf 25 transportiert werden und am Abwurf 25 von der Fördereinrichtung 11 herabfallen. Die Fördereinrichtung 11 wird dabei derart in Bewegung versetzt, dass sich eine durch den Pfeil 16 gekennzeichnete Förderrichtung für die Partikel 12 zum Abwurf 25 hin ergibt, wobei die Fördereinrichtung 11 mittels eines zugeordneten, nicht weiter dargestellten Antriebes in eine Bewegung mit sich überlagernden Bewegungsrichtungen versetzt wird, die eine Hin- und Herbewegung der Fördereinrichtung 11 in der Förderrichtung 16 sowie eine vertikale Bewegung der Fördereinrichtung 11 in einer Ebene senkrecht zur Förderebene umfassen. Diese Bewegung der Fördereinrichtung 11 ist mit dem Pfeil 17 angedeutet.

Bei dem dargestellten Ausführungsbeispiel sind dem Abwurf 25 der Fördereinrichtung 11 zwei quer zur Förderrichtung (Pfeil 16) angeordnete Leitelemente 13 und 14 zugeordnet, bestehend aus einem in Förderrichtung gemäß Pfeil 16 von dem Abwurf 25 beabstandeten und insoweit als Prallelement wirkenden vorderen Leitelement 13 und einem dem vorderen Leitelement 13 gegenüberliegenden, den Abwurf 25 der Fördereinrichtung 11 zugewandten hinteren Leitelement 14. Die Leitelemente 13 und 14 sind dabei so angeordnet, dass sie einen sich zum Abwurf 25 hin öffnenden Trichter bilden und an ihrem unteren Ende einen definierten Zuführspalt 15 ausbilden, über den die Partikel 12 die Zuteileinrichtung 10 verlassen, um anschließend im freien Fall die nachgeschaltete Bilderfassungseinrichtung zu passieren. Vorzugsweise sind die beiden Leitelemente 13, 14 als plattenartige Elemente ausgebildet und bestehen aus einem elastischen Material. Wie nicht weiter dargestellt, können die plattenartigen Elemente segmentiert ausgebildet sein, wobei die einzelnen Segmente gegeneinander verschiebbar, verschwenkbar oder einzeln an Drehgelenken aufgehängt sein können.

Bei dem dargestellten Ausführungsbeispiel gemäß Figur 1 ist vorgesehen, dass das vordere Leitelement 13 wie auch das hintere Leitelement 14 mittels eines zugeordneten Antriebes in eine Bewegung versetzt werden, wobei bei dem dargestellten Ausführungsbeispiel die Bewegung der beiden Leitelemente 13 und 14 sich in der Förderrichtung gemäß Pfeil 16 der Fördereinrichtung 11 vollzieht, insoweit die Leitelemente 13, 14 also eine entsprechende Hin- und Herbewegung auf den Abwurf 25 zu beziehungsweise von dem Abwurf 25 weg ausführen, wie durch die Bewegungspfeile 18 und 19 angedeutet ist. Soweit beide Leitelemente 13 und 14 eine gleichgerichtete Bewegung ausführen, ist vorzugsweise dafür Sorge getragen, dass die Bewegung der Leitelemente 13 und 14 gegenläufig zueinander ist, dass heißt wenn sich das hintere Leitelement 14 bei seiner Hin- und Herbewegung auf den Abwurf 25 zu bewegt, bewegt sich gleichzeitig das vordere Leitelement 13 von dem Abwurf 25 weg.

Zur Verwirklichung der Erfindung ist es aber beispielsweise auch ausreichend, wenn sich nur eines der beiden Leitelemente, insbesondere das vordere Leitelement 13 bewegt und das andere Leitelement feststehend angeordnet ist. Auch können für die Bewegung der Leitelemente 13 und 14 andere Bewegungsrichtungen als dargestellt vorgesehen sein, beispielsweise eine Bewegung der Leitelemente horizontal quer zur Förderrichtung gemäß Pfeil 16 der Fördereinrichtung 11 oder aber vertikal senkrecht zur Förderebene der Fördereinrichtung 11. Es können auch ähnlich der Bewegung der Fördereinrichtung 11 gemäß Pfeil 17 für die Leitelemente 13 und 14 einander sich überlagernde Bewegungsrichtungen eingestellt sein. Die Bewegung der Leitelemente kann dabei mit gleicher Frequenz und/oder Amplitude wie auch mit jeweils unterschiedlicher Frequenz und/oder Amplitude geschehen.

Das in Figur 2 dargestellte Ausführungsbeispiel unterscheidet sich von dem zu Figur 1 dargestellten Ausführungsbeispiel dadurch, dass an den Abwurf 25 der Fördereinrichtung 11 ein zusätzliches Absturzelement 20 anschließt, welches in Form einer vertikal ausgerichteten Platte ausgebildet ist, die in den von den Leitelementen 13 und 14 gebildeten Zuführspalt 15 hineinreicht. Bei dem dargestellten Ausführungsbeispiel ist vorgesehen, dass das vordere Leitelement 13 eine Hin- und Herbewegung entsprechend der Förderrichtung gemäß Pfeil 16 der Fördereinrichtung 11 ausführt wie durch Pfeil 18 in Figur 1 gekennzeichnet; das hintere Leitelement 14 steht still, soweit es von dem Absturzelement 20 abgedeckt ist. Das Absturzelement 20 seinerseits ist wiederum beweglich ausgebildet, und zwar bei dem dargestellten Ausführungsbeispiel mit sich überlagernden Bewegungsrichtungen in der gleichen Form, wie dies für die Fördereinrichtung 11 beschrieben und mit Pfeil 17 gekennzeichnet ist. Insofern kann bei einer derartigen Ausbildung auch vorgesehen sein, dass das Absturzelement 20 zur Ausführung seiner Bewegung mit dem Antrieb für die Fördereinrichtung 11 gekoppelt ist, so dass die Bewegungen von Fördereinrichtung 11 und Absturzelement 20 gleichgerichtet sind. Selbstverständlich kann dem Absturzelement 20 aber auch ein eigener Antrieb zugeordnet sein, mittels dessen dem Absturzelement 20 eine eigenständige Bewegung vermittelbar ist, ähnlich wie dies für das vordere Leitelement 13 beziehungsweise das hintere Leitelement 14 beschrieben ist.

Die in der vorstehenden Beschreibung, den Patentansprüchen, der Zusammenfassung und der Zeichnung offenbarten Merkmale des Gegenstandes dieser Unterlagen können einzeln als auch in beliebigen Kombinationen untereinander für die Verwirklichung der Erfindung in ihren verschiedenen Ausführungsformen wesentlich sein.

## Patentansprüche

1. Zuteileinrichtung (10) zur Vereinzelung und Orientierung von Partikeln (12) in einem über die Zuteileinrichtung zu einem Partikelmessgerät geführten Partikelstrom, wobei die Zuteileinrichtung (10) eine Fördereinrichtung (11) mit einem an deren Ende angeordneten Abwurf (25) für die im freien Fall eine nachgeschaltete Bilderfassungseinrichtung passierenden Partikel (12) umfasst, **dadurch gekennzeichnet, dass** dem Abwurf (25) der Fördereinrichtung (11) wenigstens zwei relativ zueinander bewegliche Leitelemente (13, 14) mit einem sich dazwischen ausbildenden Zuführspalt (15) für die von dem Abwurf (25) fallenden vereinzelten Partikel (12) zugeordnet sind, die nach Art eines an ihrem Ende den Zuführspalt (15) ausbildenden Trichters angeordnet sind, wobei wenigstens eines der Leitelemente (13, 14) unter der Wirkung eines Antriebes beweglich angeordnet ist.

2. Zuteileinrichtung nach Anspruch 1, **dadurch gekennzeichnet, dass** eines der beiden Leitelemente (13, 14) horizontal in der Förderrichtung (Pfeil 16) der Fördereinrichtung (11) mit einstellbarer Frequenz und Amplitude bewegbar ist.

3. Zuteileinrichtung nach Anspruch 1; **dadurch gekennzeichnet, dass** eines der beiden Leitelemente (13, 14) horizontal quer zur Förderrichtung (Pfeil 16) der Fördereinrichtung (11) mit einstellbarer Frequenz und Amplitude bewegbar ist.

4. Zuteileinrichtung nach Anspruch 1, **dadurch gekennzeichnet, dass** eines der beiden Leitelemente (13, 14) vertikal senkrecht zur Förderebene der Fördereinrichtung (11) mit einstellbarer Frequenz und Amplitude bewegbar ist.

5. Zuteileinrichtung nach einem der Ansprüche 1 bis 4, **dadurch gekennzeichnet, dass** die einander zur Ausbildung des Trichters gegenüberliegend angeordneten Leitelemente (13, 14) gleichzeitig in unterschiedlichen Bewegungsrichtungen beweglich sind.

6. Zuteileinrichtung nach einem der Ansprüche 1 bis 4, **dadurch gekennzeichnet, dass** die einander zur Ausbildung des Trichters gegenüberliegend angeordneten Leitelemente (13, 14) gleichzeitig in der gleichen Bewegungsrichtung beweglich sind.

7. Zuteileinrichtung nach Anspruch 6, **dadurch gekennzeichnet, dass** bei einer gleichzeitigen Bewegung der Leitelemente (13, 14) in der gleichen Bewegungsrichtung die Bewegung der Leitelemente (13, 14) gegenläufig zueinander eingerichtet ist.

8. Zuteileinrichtung nach einem der Ansprüche 1 bis 7, **dadurch gekennzeichnet, dass** die Bewegung der Leitelemente (13, 14) jeweils mit der gleichen Frequenz erfolgt.

9. Zuteileinrichtung nach einem der Ansprüche 1 bis 7, **dadurch gekennzeichnet, dass** die Bewegung der Leitelemente (13, 14) jeweils mit unterschiedlicher Frequenz erfolgt.

10. Zuteileinrichtung nach einem der Ansprüche 1 bis 9, **dadurch gekennzeichnet, dass** die Bewegung der Leitelemente (13, 14) mit gleichen Amplituden erfolgt.

11. Zuteileinrichtung nach einem der Ansprüche 1 bis 9, **dadurch gekennzeichnet, dass** die Bewegung der Leitelemente (13, 14) mit unterschiedlichen Amplituden erfolgt.

12. Zuteileinrichtung nach einem der Ansprüche 1 bis 11, **dadurch gekennzeichnet, dass** die Leitelemente (13, 14) quer zur Abwurfrichtung der Fördereinrichtung (11) ausgerichtet sind, wobei das in Förderrichtung (Pfeil 16) der Fördereinrichtung (11) von deren Abwurf (25) beabstandete Leitelement (13) als Prallelement wirkt.

13. Zuteileinrichtung nach einem der Ansprüche 1 bis 12, **dadurch gekennzeichnet, dass** an den Abwurf (25) der Fördereinrichtung (11) ein zusätzliches Absturzelement (20) angeschlossen ist, welches sich in den von den Leitelementen (13, 14) gebildeten Zuführspalt (15) erstreckt.

14. Zuteileinrichtung nach Anspruch 13, **dadurch gekennzeichnet, dass** das Absturzelement (20) unter der Wirkung eines Antriebes beweglich ist.

15. Zuteileinreichung nach einem der Ansprüche 1 bis 11, **dadurch gekennzeichnet, dass** sich die einander gegenüberliegenden Leitelemente (13, 14) in der Förderrichtung (Pfeil 16) der Fördereinrichtung (11) erstrecken.

16. Zuteileinrichtung nach Anspruch 15, **dadurch gekennzeichnet, dass** der Abwurf (25) der Fördereinrichtung (11) zwischen den trichterförmig angeordneten Leitelementen (13, 14) positioniert ist.

17. Zuteileinrichtung nach einem der Ansprüche 1 bis 16, **dadurch gekennzeichnet dass** die Leitelemente (13, 14) und/oder das Absturzelement (20) plattenartig ausgebildet sind.

18. Zuteileinrichtung nach einem der Ansprüche 1 bis 17, **dadurch gekennzeichnet, dass** die Leitelemente (13, 14) und/oder das Absturzelement (20) aus einem elastischen Material bestehen.

19. Zuteileinrichtung nach Anspruch 17 oder 18, **dadurch gekennzeichnet, dass** die Leitelemente (13, 14) und/oder das Absturzelement (20) aus einzelnen, gegeneinander beweglich angeordneten Segmenten bestehen.

20. Zuteileinrichtung nach Anspruch 19, **dadurch gekennzeichnet, dass** die Segmente von Leitelementen (13, 14) und/oder Absturzelement (20) gegeneinander verschiebbar angeordnet sind.

21. Zuteileinrichtung nach Anspruch 19, **dadurch gekennzeichnet, dass** die Segmente von Leitelementen (13, 14) und/oder Absturzelement (20) verschwenkbar angeordnet sind.

22. Zuteileinrichtung nach Anspruch 19, **dadurch gekennzeichnet, dass** die Segmente von Leitelementen (13, 14) und/oder Absturzelement (20) jeweils drehbeweglich angeordnet sind.

23. Zuteileinrichtung nach einem der Ansprüche 1 bis 22, **dadurch gekennzeichnet, dass** die Antriebe zur Ausführung der Bewegung von Leitelementen (13, 14) und/oder Absturzelement (20) rotatorische Antriebe mit oder ohne nachgeschaltetem Getriebe sind.

24. Zuteileinrichtung nach einem der Ansprüche 1 bis 22, **dadurch gekennzeichnet, dass** die Antriebe zur Ausführung der Bewegung von Leitelementen (13, 14) und/oder Absturzelement (20) Linearantriebe mit oder ohne nachgeschaltetem Getriebe sind.

25. Zuteileinrichtung nach Anspruch 23 oder 24, **dadurch gekennzeichnet, dass** die Antriebe als elektrische, hydraulische oder pneumatische Antriebe ausgebildet sind.

## Claims

1. Metering means (10) for the separation and orientation of particles (12) in a particle flow guided to a particle sizer via the metering means, wherein the metering means (10) comprises a conveyor (11) with a discharge (25) at its end for the parti-cles (12) passing a downstream image acquisition device in freefall, **characterised in that** the discharge (25) of the conveyor (11) is coordinated with at least two guide elements (13, 14) that are movable with respect to one another and have a feed gap (15) formed between them for the separated particles (12) falling from the discharge (25), and which are arranged in the form of a funnel at the end of the feed gap (15), wherein at least one of the guide elements (13, 14) is arranged to be movable under the action of a drive.

2. Metering means according to claim 1, **characterised in that** one of the two guide elements (13, 14) is movable horizontally in the conveying direction (arrow 16) of the conveyor (11) with adjustable frequency and amplitude.

3. Metering means according to claim 1, **characterised in that** one of the two guide elements (13, 14) is movable horizontally transversely to the conveying direction (arrow 16) of the conveyor (11) with adjustable frequency and amplitude.

4. Metering means according to claim 1, **characterised in that** one of the two guide elements (13, 14) is movable vertically perpendicular to the conveying plane of the conveyor (11) with adjustable frequency and amplitude.

5. Metering means according to one of the claims 1 to 4, **characterised in that** the mutually oppositely disposed guide elements (13, 14) are simultaneously movable in different directions of movement to form the funnel.

6. Metering means according to one of the claims 1 to 4, **characterised in that** the mutually oppositely disposed guide elements (13, 14) are simultaneously movable in the same direction of movement to form the funnel.

7. Metering means according to claim 6, **characterised in that**, upon simultaneous movement of the guide elements (13, 14) in the same direction of movement, the movement of the guide elements (13, 14) is arranged in opposite directions.

8. Metering means according to one of the claims 1 to 7, **characterised in that** the movement of the guide elements (13, 14) is effected in each case with the same frequency.

9. Metering means according to one of the claims 1 to 7, **characterised in that** the movement of the guide elements (13, 14) is effected in each case with a different frequency

10. Metering means according to one of the claims 1 to 9, **characterised in that** the movement of the guide elements (13, 14) is effected in each case with the same amplitudes.

11. Metering means according to one of the claims 1 to 9, **characterised in that** the movement of the guide elements (13, 14) is effected in each case with different amplitudes.

12. Metering means according to one of the claims 1 to 11, **characterised in that** the movements of the guide elements (13, 14) are aligned transversely to the discharge direction of the conveyor (11), wherein the guide element (13) spaced from the discharge (25) of the conveyor (11) in the conveying direction (arrow 16) acts as a baffle element.

13. Metering means according to one of the claims 1 to 12, **characterised in that** the discharge (25) of the conveyor (11) is connected with an additional collision element (20), which extends into the feed gap (15) formed by the guide elements (13, 14).

14. Metering means according to claim 13, **characterised in that** the collision element (20) is movable under the action of a drive.

15. Metering means according to one of the claims 1 to 11, **characterised in that** the mutually oppositely disposed guide elements (13, 14) extend in the conveying direction (arrow 16) of the conveyor (11).

16. Metering means according to claim 15, **characterised in that** the discharge (25) of the conveyor (11) is arranged between the guide elements (13, 14) in the form of a funnel,

17. Metering means according to one of the claims 1 to 16, **characterised in that** the guide elements (13,14) and/or the collision element (20) are designed in the form of a plate.

18. Metering means according to one of the claims 1 to 17, **characterised in that** the guide elements (13,14) and/or the collision element (20) consist of an elastic material.

19. Metering means according to one of the claims 17 or 18, **characterised in that** the guide elements (13,14) and/or the collision element (20) consist of individual mutually movable segments.

20. Metering means according to claim 19, **characterised in that** the segments of the guide elements (13, 14) and/or collision element (20) are arranged to be mutually displaceable.

21. Metering means according to claim 19, **characterised in that** the segments of the guide elements (13, 14) and/or collision element (20) are arranged to pivot.

22. Metering means according to claim 19, **characterised in that** the segments of the guide elements (13, 14) and/or collision element (20) are each arranged to rotate.

23. Metering means according to one of the claims 1 to 22, **characterised in that** the drives for effecting the movement of the guide elements (13, 14) and/or the collision element (20) are rotary drives with or without a downstream gearbox.

24. Metering means according to any one of claims 1 to 22, **characterised in that** the drives for effecting the movement of the guide elements (13, 14) and/or the collision element (20) are linear drives with or without a downstream gearbox.

25. Metering means according to claim 23 or 24, **characterised in that** the drives are formed as electric, hydraulic or pneumatic drives.

## Revendications

1. Dispositif de répartition (10) pour individualiser et orienter des particules (12) dans un courant de particules guidé par l'intermédiaire du dispositif de répartition jusqu'à un appareil de mesure des particules, le dispositif de répartition (10) comprenant un dispositif de transport (11), comportant un dispositif de déchargement (25), disposé en son extrémité, pour les particules (12) passant en chute libre devant un dispositif de saisie d'image monté en aval, **caractérisé en ce qu'**au moins deux éléments de guidage (13, 14), mobiles l'un par rapport à l'autre, présentant une fente d'alimentation (15) réalisée entre eux pour les particules individualisées (12) tombant du dispositif de déchargement (25), sont affectés au dispositif de déchargement (25) du dispositif de transport (11), éléments de guidage qui sont disposés sous la forme d'un entonnoir réalisant en son extrémité la fente d'alimentation (15), au moins l'un des éléments de guidage (13, 14) étant disposé de façon à être mobile sous l'action d'un organe d'entraînement.

2. Dispositif de répartition selon la revendication 1, **caractérisé en ce que** l'un des deux éléments de guidage (13, 14) est mobile horizontalement dans la direction de transport (flèche 16) du dispositif de transport (11), avec une fréquence et une amplitude pouvant être ajustées.

3. Dispositif de répartition selon la revendication 1, **caractérisé en ce que** l'un des deux éléments de guidage (13, 14) est mobile horizontalement, transversalement à la direction de transport (flèche 16) du dispositif de transport (11), avec une fréquence et une amplitude pouvant être ajustées.

4. Dispositif de répartition selon la revendication 1, **caractérisé en ce que** l'un des deux éléments de guidage (13, 14) est mobile verticalement, perpendiculairement au plan de transport du dispositif de transport (11), avec une fréquence et une amplitude pouvant être ajustées.

5. Dispositif de répartition selon l'une des revendications 1 à 4, **caractérisé en ce que** les éléments de guidage (13, 14), disposés d'une manière opposée l'un à l'autre pour la réalisation de l'entonnoir, sont mobiles simultanément dans différentes directions de mouvement.

6. Dispositif de répartition selon l'une des revendications 1 à 4, **caractérisé en ce que** les éléments de guidage (13, 14) disposés d'une manière opposée l'un à l'autre pour la formation de l'entonnoir sont mobiles simultanément dans la même direction de mouvement.

7. Dispositif de répartition selon la revendication 6, **caractérisé en ce que**, en présence d'un mouvement simultané des éléments de guidage (13, 14) dans la même direction de mouvement, les éléments de guidage (13, 14) peuvent se déplacer en sens contraires.

8. Dispositif de répartition selon l'une des revendications 1 à 7, **caractérisé en ce que** le mouvement de chacun des éléments de guidage (13, 14) s'effectue à la même fréquence.

9. Dispositif de répartition selon l'une des revendications 1 à 7, **caractérisé en ce que** le mouvement de chacun des éléments de guidage (13, 14) s'effectue à une fréquence différente.

10. Dispositif de répartition selon l'une des revendications 1 à 9, **caractérisé en ce que** le mouvement des éléments de guidage (13, 14) s'effectue à la même amplitude.

11. Dispositif de répartition selon l'une des revendications 1 à 9, **caractérisé en ce que** le mouvement des éléments de guidage (13, 14) s'effectue avec des amplitudes différentes.

12. Dispositif de répartition selon l'une des revendications 1 à 11, **caractérisé en ce que** les éléments de guidage (13, 14) sont orientés perpendiculairement à la direction de déchargement du dispositif de transport (11), l'élément de guidage (13), qui dans la direction de transport (flèche 16) du dispositif de transport (11) est écarté du dispositif de déchargement (25), agissant comme un élément déflecteur.

13. Dispositif de répartition selon l'une des revendications 1 à 12, **caractérisé en ce qu'**au dispositif de déchargement (25) du dispositif de transport (11) est raccordé un élément de déversement supplémentaire (20), qui s'étend dans la fente d'alimentation (15) formée par les éléments de guidage (13, 14).

14. Dispositif de répartition selon la revendication 13, **caractérisé en ce que** l'élément de déversement (20) est mobile sous l'action d'un organe d'entraînement.

15. Dispositif de répartition selon l'une des revendications 1 à 11, **caractérisé en ce que** les éléments de guidage (13, 14) opposés l'un à l'autre s'étendent dans la direction de transport (flèche 16) du dispositif de transport (11).

16. Dispositif de répartition selon la revendication 15, **caractérisé en ce que** le dispositif de déchargement (25) du dispositif de transport (11) est positionné entre les éléments de guidage (13, 14) disposés en forme d'entonnoir.

17. Dispositif de répartition selon l'une des revendications 1 à 16, **caractérisé en ce que** les éléments de guidage (13, 14) et/ou l'élément de déversement (20) sont configurés sous forme de plaques.

18. Dispositif de répartition selon l'une des revendications 1 à 17, **caractérisé en ce que** les éléments de guidage (13, 14) et/ou l'élément de déversement (20) sont constitués d'un matériau élastique.

19. Dispositif de répartition selon la revendication 17 ou 18, **caractérisé en ce que** les éléments de guidage (13, 14) et/ou l'élément de déversement (20) sont constitués de segments individuels, disposés de façon à être mobiles les uns par rapport aux autres.

20. Dispositif de répartition selon la revendication 19, **caractérisé en ce que** les segments des éléments de guidage (13, 14) et/ou de l'élément de déversement (20) sont disposés de façon à pouvoir coulisser les uns par rapport aux autres.

21. Dispositif de répartition selon la revendication 19, **caractérisé en ce que** les segments des éléments de guidage (13, 14) et/ou de l'élément de déversement (20) sont disposés d'une manière pivotante.

22. Dispositif de répartition selon la revendication 19, **caractérisé en ce que** les segments des éléments de guidage (13, 14) et/ou de l'élément de déversement (20) sont chacun disposés de façon à pouvoir subir une rotation.

23. Dispositif de répartition selon l'une des revendications 1 à 22, **caractérisé en ce que** les organes d'entraînement destinés à réaliser le mouvement des éléments de guidage (13, 14) et/ou de l'élément de déversement (20) sont des organes d'entraînement tournants, précédés ou suivis d'un engrenage.

24. Dispositif de répartition selon l'une des revendications 1 à 22, **caractérisé en ce que** les organes d'entraînement pour réaliser le mouvement des éléments de guidage (13, 14) et/ou de l'élément de déversement (20) sont des organes d'entraînement linéaires, précédés ou suivis d'un engrenage.

25. Dispositif de répartition selon la revendication 23 ou 24, **caractérisé en ce que** les organes d'entraînement sont conçus comme des organes d'entraînement électriques, hydrauliques ou pneumatiques.
